# EUROPEAN PATENT APPLICATION

(11) **EP 4 675 739 A1**
(43) Date of publication of application: **07.01.2026**
(21) Application number: 23924489.0
(22) Date of filing: 27.02.2023
(51) Int. Cl.: H01M 10/0562, H01B 1/10

(54) **ALL-SOLID-STATE BATTERY**

(71) Applicant: Nissan Motor Co., Ltd., Kanagawa 221-0023 (JP)
(72) Inventor: DOI, Shotaro, Atsugi-shi, Kanagawa 243-0123 (JP); HAKODA, Takashi, Atsugi-shi, Kanagawa 243-0123 (JP); IKEKAWA, Hideki, Atsugi-shi, Kanagawa 243-0123 (JP)
(74) Representative: Grünecker Patent- und Rechtsanwälte PartG mbB
(86) International application number: PCT/JP2023/006951
(87) International publication number: WO 2024/180579

(57) **Abstract**

Provided is a means capable of further suppressing a short circuit while suppressing a decrease in energy density in an all-solid-state battery including a solid electrolyte layer. An all-solid-state battery, including a power generating element including: a positive electrode including a positive electrode active material layer, a negative electrode including a negative electrode active material layer, and a solid electrolyte layer interposed between the positive electrode and the negative electrode and containing a solid electrolyte, wherein the solid electrolyte layer includes a first solid electrolyte layer adjacent to the positive electrode active material layer and containing a first solid electrolyte and a first binder, and a second solid electrolyte layer adjacent to the negative electrode active material layer and containing a second solid electrolyte and a second binder, the first binder and the second binder each contain a specific binder, and when the power generating element is viewed in plan view, at least a part of an outer peripheral end of the positive electrode active material layer is located inside an outer peripheral end of the first solid electrolyte layer or an outer peripheral end of the second solid electrolyte layer.

## Description

### TECHNICAL FIELD

The present invention relates to an all-solid-state battery.

### BACKGROUND ART

In recent years, research and development on an all-solid-state battery, such as an all-solid-state lithium secondary battery, using an oxide-based or sulfide-based solid electrolyte as an electrolyte have been actively conducted. The solid electrolyte is a material mainly made of an ion conductor that enables lithium ion conduction in a solid. For this reason, the all-solid-state battery has the advantage that, in principle, various problems caused by a combustible organic electrolyte solution do not occur unlike the conventional liquid-type lithium secondary battery.

In the all-solid-state battery, a solid electrolyte layer containing a solid electrolyte is disposed between a positive electrode and a negative electrode. Here, from the viewpoint of improving the energy density, it is desirable to reduce the thickness of the solid electrolyte layer, but it is known that when the thickness is reduced, pinholes are easily formed in the solid electrolyte and a short circuit easily occurs.

WO 2014/010043 A1 discloses that an electrolyte layer (solid electrolyte layer) of an all-solid-state battery has a configuration in which a first solid electrolyte layer containing a sulfide solid electrolyte and a second solid electrolyte layer different from the first solid electrolyte layer containing the sulfide solid electrolyte are laminated. According to this literature, by adopting the above configuration, even when pinholes are formed in the first solid electrolyte layer and the second solid electrolyte layer, there is an extremely low possibility that these pinholes are connected so as to penetrate the electrolyte layer (solid electrolyte layer) in the thickness direction, and thus a short circuit can be suppressed.

### SUMMARY OF INVENTION

However, according to the study of the present inventors, it has been found that there is a case where a short circuit cannot be sufficiently suppressed even if the technique described in the above literature is adopted.

Therefore, an object of the present invention is to provide a means capable of further suppressing a short circuit while suppressing a decrease in energy density in an all-solid-state battery including a solid electrolyte layer.

The present inventors have conducted intensive studies to solve the above problems. As a result, the present inventors have found that the above problems can be solved by forming a solid electrolyte layer having a configuration in which a first solid electrolyte and a second solid electrolyte layer are laminated, and controlling the type of binder contained in each layer and the size of each layer, and have completed the present invention.

That is, one aspect of the present invention is an all-solid-state battery, including a power generating element including: a positive electrode including a positive electrode active material layer, a negative electrode including a negative electrode active material layer, and a solid electrolyte layer interposed between the positive electrode and the negative electrode and containing a solid electrolyte, wherein the solid electrolyte layer includes a first solid electrolyte layer adjacent to the positive electrode active material layer and containing a first solid electrolyte and a first binder, and a second solid electrolyte layer adjacent to the negative electrode active material layer and containing a second solid electrolyte and a second binder, the first binder contains at least one selected from the group consisting of polytetrafluoroethylene, carboxymethyl cellulose, polyethylene oxide, polyvinyl alcohol, and polyethylene, the second binder contains at least one selected from the group consisting of styrene-butadiene rubber, polyvinylidene fluoride, polybutylene terephthalate, polyethylene terephthalate, carboxymethyl cellulose, polyethylene oxide, polyvinyl alcohol, polyethylene, polypropylene, polymethylpentene, polybutene, polyether nitrile, polyacrylonitrile, polyimide, polyamide, polyamideimide, an ethylene-vinyl acetate copolymer, polyvinyl chloride, an ethylene-propylene-diene copolymer, a styrene-butadiene-styrene block copolymer, and a styrene-isoprene-styrene block copolymer, and when the power generating element is viewed in plan view, at least a part of an outer peripheral end of the positive electrode active material layer is located inside an outer peripheral end of the first solid electrolyte layer or an outer peripheral end of the second solid electrolyte layer.

### BRIEF DESCRIPTION OF DRAWINGS

Fig. 1 is a cross-sectional view schematically illustrating an overall structure of a laminate type (internal parallel connection type) all-solid-state lithium secondary battery (laminate type secondary battery) as one embodiment of the present invention.
Fig. 2 is an enlarged cross-sectional view of a single battery layer 19 of a laminate type secondary battery according to one embodiment of the present invention.

### DESCRIPTION OF EMBODIMENTS

An embodiment of the present invention is an all-solid-state battery, including a power generating element including: a positive electrode including a positive electrode active material layer, a negative electrode including a negative electrode active material layer, and a solid electrolyte layer interposed between the positive electrode and the negative electrode and containing a solid electrolyte, wherein the solid electrolyte layer includes a first solid electrolyte layer adjacent to the positive electrode active material layer and containing a first solid electrolyte and a first binder, and a second solid electrolyte layer adjacent to the negative electrode active material layer and containing a second solid electrolyte and a second binder, the first binder contains at least one selected from the group consisting of polytetrafluoroethylene, carboxymethyl cellulose, polyethylene oxide, polyvinyl alcohol, and polyethylene, the second binder contains at least one selected from the group consisting of styrene-butadiene rubber, polyvinylidene fluoride, polybutylene terephthalate, polyethylene terephthalate, carboxymethyl cellulose, polyethylene oxide, polyvinyl alcohol, polyethylene, polypropylene, polymethylpentene, polybutene, polyether nitrile, polyacrylonitrile, polyimide, polyamide, polyamideimide, an ethylene-vinyl acetate copolymer, polyvinyl chloride, an ethylene-propylene-diene copolymer, a styrene-butadiene-styrene block copolymer, and a styrene-isoprene-styrene block copolymer, and when the power generating element is viewed in plan view, at least a part of an outer peripheral end of the positive electrode active material layer is located inside an outer peripheral end of the first solid electrolyte layer or an outer peripheral end of the second solid electrolyte layer. According to the present aspect, in the all-solid-state battery including a solid electrolyte layer, it is possible to further suppress a short circuit while suppressing a decrease in energy density.

Hereinafter, embodiments of the present invention will be described with reference to the accompanying drawings. In the description of the drawings, the same elements are denoted by the same reference numerals, and redundant description will be omitted. Dimensional ratios in the drawings are exaggerated for convenience of description, and may be different from actual ratios.

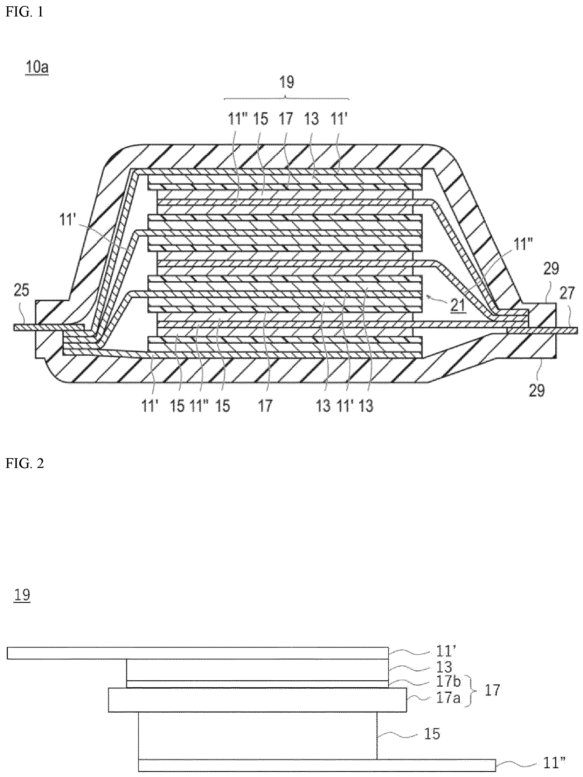

Fig. 1 is a cross-sectional view schematically illustrating an overall structure of a laminate type (internal parallel connection type) all-solid-state lithium secondary battery (hereinafter, also simply referred to as "laminate type secondary battery") as one embodiment of the present invention. A laminate type secondary battery 10a illustrated in Fig. 1 has a structure in which a power generating element 21 having a substantially rectangular shape in which a charge-discharge reaction actually proceeds is sealed inside a laminate film 29 as a battery outer casing body. Fig. 1 illustrates a cross section of the laminate type secondary battery during charging, and thus a negative electrode active material layer 13 made of lithium metal is present between a negative electrode current collector 11' and a solid electrolyte layer 17. A confining pressure is applied to the laminate type secondary battery 10a in a lamination direction of the power generating element 21 by a pressurizing member (not illustrated). Therefore, the volume of the power generating element 21 is kept constant.

As illustrated in Fig. 1, the power generating element 21 of the laminate type secondary battery 10a of the present aspect has a configuration in which a negative electrode where the negative electrode active material layer 13 containing lithium metal is disposed on both surfaces of the negative electrode current collector 11', the solid electrolyte layer 17, and a positive electrode where a positive electrode active material layer 15 containing a lithium transition metal composite oxide is disposed on both surfaces of a positive electrode current collector 11" are laminated. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thereby, the negative electrode, the solid electrolyte layer, and the positive electrode that are adjacent constitute one single battery layer 19. Therefore, it can be said that the laminate type secondary battery 10a illustrated in Fig. 1 has a configuration in which a plurality of single battery layers 19 are laminated to be electrically connected in parallel.

The negative electrode current collector 11' and the positive electrode current collector 11" have a structure in which a negative electrode current collecting plate 25 and a positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between end parts of the laminate film 29. The negative electrode current collecting plate 25 and the positive electrode current collecting plate 27 may be attached to the negative electrode current collector 11' and the positive electrode current collector 11" of the respective electrodes with a negative electrode terminal lead and a positive electrode terminal lead (not illustrated) interposed therebetween, respectively by ultrasonic welding, resistance welding, or the like as necessary.

In the above description, one embodiment of the lithium secondary battery according to one aspect of the present invention has been described by taking the laminate type (internal parallel connection type) all-solid-state lithium secondary battery as an example. However, the type of the lithium secondary battery to which the present invention can be applied is not particularly limited, and the present invention can also be applied to a bipolar lithium secondary battery.

Fig. 2 is an enlarged cross-sectional view of the single battery layer 19 of a laminate type secondary battery according to one embodiment of the present invention. As illustrated in Fig. 2, the single battery layer 19 constituting the laminate type secondary battery 10a according to the present embodiment has a positive electrode including the positive electrode current collector 11" and the positive electrode active material layer 15 disposed on the surface of the positive electrode current collector 11", and a negative electrode including the negative electrode current collector 11' and the negative electrode active material layer 13 disposed on the surface of the negative electrode current collector 11'. The solid electrolyte layer 17 having a configuration in which two layers of a first solid electrolyte layer 17a and a second solid electrolyte layer 17b are laminated is disposed between the positive electrode and the negative electrode, the first solid electrolyte layer 17a is adjacent to the positive electrode active material layer 15, and the second solid electrolyte layer 17b is adjacent to the negative electrode active material layer 13. Here, in the embodiment illustrated in Fig. 2, when the single battery layer 19 is viewed in plan view, the outer peripheral end of the positive electrode active material layer 15 is located inside the outer peripheral end of the first solid electrolyte layer 17a over the entire circumference (in other words, the first solid electrolyte layer 17a is slightly larger than the positive electrode active material layer 15). With such a configuration, it is possible to prevent growth of dendrite from the outer peripheral end of the negative electrode active material layer 13 and a short circuit due to contact between the dendrite and the positive electrode active material layer 15 caused by the growth. The outer peripheral end of the second solid electrolyte layer 17b of the present embodiment is located inside the outer peripheral end of the first solid electrolyte layer 17a over the entire circumference. The outer peripheral end of the negative electrode active material layer 13 of the present embodiment coincides with the outer peripheral end of the second solid electrolyte layer 17b over the entire circumference.

In the embodiment illustrated in Fig. 2, the first solid electrolyte layer 17a contains Li₆PS₅Cl as the first solid electrolyte and polytetrafluoroethylene (PTFE) as the first binder. In the first solid electrolyte layer 17a, Li₆PS₅Cl is held by being entangled with fibrillated polytetrafluoroethylene (PTFE), and the first solid electrolyte layer 17a has a high mechanical strength enough to exist as a free-standing film. As a result, when the first solid electrolyte layer 17a has a size slightly larger than that of the positive electrode active material layer 15, cracking and chipping of the outer peripheral end portion of the first solid electrolyte layer 17a are suppressed, and the action and effect of present invention can be more remarkably exhibited. In the embodiment illustrated in Fig. 2, the second solid electrolyte layer 17b adjacent to the negative electrode active material layer 13 contains Li₆PS₅Cl as the second solid electrolyte and styrene-butadiene rubber (SBR) as the second binder. By adopting, as the second binder, such a material that is hardly decomposed even by the reduction potential of the negative electrode, deterioration of the solid electrolyte layer due to repeated charging and discharging is suppressed, and the capacity retention rate can be improved.

Hereinafter, main components of the laminate type secondary battery 10a described above will be described.

### [Current collector]

The current collector (the negative electrode current collector 11' and the positive electrode current collector 11") has a function of mediating transfer of electrons from the electrode active material layer. A material constituting the current collector is not particularly limited. As a constituent material of the current collector, for example, a metal such as aluminum, nickel, iron, stainless steel, titanium, or copper, or a resin having conductivity can be adopted. The thickness of the current collector is not particularly limited, but is, for example, 10 to 100 µm.

### [Negative electrode active material layer]

The negative electrode active material layer 13 contains a negative electrode active material, and contains a solid electrolyte, a binder, and a conductive aid as necessary. The type of the negative electrode active material is not particularly limited, and examples thereof include a carbon material, a metal oxide, and a metal active material. As the negative electrode active material, an active material containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, Sn, Mg, Au, Ag, and Zn. The negative electrode active material preferably contains metal lithium or a lithium-containing alloy, a silicon-based negative electrode active material, or a tin-based negative electrode active material, and particularly preferably contains metal lithium or a lithium-containing alloy. When the negative electrode active material uses metal lithium or a lithium-containing alloy, as illustrated in Figs. 1 and 2, the lithium secondary battery is preferably a so-called lithium-deposition type in which lithium metal as the negative electrode active material is deposited on the negative electrode current collector in the charging process. In this case, since a layer made of lithium metal deposited on the negative electrode current collector in the charging process becomes a negative electrode active material layer, the thickness of the negative electrode active material layer increases with the progression of the charging process, and the thickness of the negative electrode active material layer decreases with the progression of the discharging process. The negative electrode active material layer may not be present when the battery has been completely discharged, but in some cases, a negative electrode active material layer made of a certain amount of lithium metal may be disposed when the battery has been completely discharged. The thickness of the negative electrode active material layer (lithium metal layer) when the battery has been completely charged is not particularly limited, but is usually 0.1 to 1000 µm.

### [Solid electrolyte layer]

The solid electrolyte layer 17 has a configuration in which the first solid electrolyte layer 17a containing a first solid electrolyte and a first binder and the second solid electrolyte layer 17b containing a second solid electrolyte and a second binder are laminated. In the laminate type secondary battery 10a according to the present embodiment illustrated in Fig. 2, the solid electrolyte layer 17 is disposed such that the first solid electrolyte layer 17a is adjacent to the positive electrode active material layer 15 and the second solid electrolyte layer 17b is adjacent to the negative electrode active material layer 13.

### (First solid electrolyte and second solid electrolyte)

The first solid electrolyte constituting the first solid electrolyte layer and the second solid electrolyte constituting the second solid electrolyte layer are not particularly limited, and conventionally known solid electrolytes can be appropriately used. Examples of the solid electrolyte include a sulfide-based solid electrolyte and an oxide-based solid electrolyte.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (for example, Li₇P₃S₁₁). As the sulfide solid electrolyte, for example, LGPS represented by Li₍₄₋ₓ₎Ge₍₁₋ₓ₎PₓS₄ (x satisfies 0 < x < 1) or the like may be used. Among them, the sulfide solid electrolyte is preferably a sulfide solid electrolyte containing a P element. The sulfide solid electrolyte may contain halogen (F, Cl, Br, or I), and examples thereof include Li₆PS₅X (where X is Cl, Br, or I, preferably Cl).

Examples of the oxide solid electrolyte include a compound having a NASICON-type structure, and the like. Examples of the compound having a NASICON-type structure include a compound (LAGP) represented by general formula: Li₁₊ₓAlₓGe₂₋ₓ(PO₄)₃ (0 ≤ x ≤ 2), a compound (LATP) represented by general formula: Li₁₊ₓAlₓTi₂₋ₓ(PO₄)₃ (0 ≤ x ≤ 2), and the like. Other examples of the oxide solid electrolyte include LiLaTiO (for example, Li_{0.34}La_{0.51}TiO₃), LiPON (for example, Li_{2.9}PO_{3.3}N_{0.46}), LiLaZrO (for example, Li₇La₃Zr₂O₁₂), and the like.

From the viewpoint of further improving the lithium ion conductivity of the solid electrolyte layer, both the first solid electrolyte and the second solid electrolyte are preferably sulfide-based solid electrolytes, and both the first solid electrolyte and the second solid electrolyte are more preferably Li₆PS₅X (where X is Cl, Br, or I, preferably Cl). However, the first solid electrolyte and the second solid electrolyte may be of different types.

The shape of the solid electrolyte is preferably particulate. When the solid electrolyte is particulate, the average particle size (D50) thereof is not particularly limited, but is preferably 0.01 µm or more and 40 µm or less, more preferably 0.01 µm or more and 20 µm or less, further preferably 0.1 µm or more and 10 µm or less, and still more preferably 0.1 µm or more and 1 µm or less. In the present specification, as the average particle size (D50) of the solid electrolyte, a value calculated as an average value of the particle sizes of the solid electrolyte observed in several to several dozen visual fields using an observation means such as a scanning electron microscope (SEM) or a transmission electron microscope (TEM) is adopted.

### (First binder)

The binder (first binder) contained in the first solid electrolyte layer contains at least one selected from the group consisting of polytetrafluoroethylene (PTFE), carboxymethyl cellulose (CMC), polyethylene oxide (PEO), polyvinyl alcohol (PVA), and polyethylene (PE). These binders can be fibrillated by applying a shear force to intertwine and retain the solid electrolyte. By using such a binder, the first solid electrolyte layer has a high mechanical strength enough to exist as a free-standing film. As a result, when the first solid electrolyte layer has a slightly larger than that of the positive electrode active material layer, cracking and chipping of the outer peripheral end portion of the first solid electrolyte layer can be suppressed. From the viewpoint of further improving the mechanical strength of the first solid electrolyte layer, the first binder preferably contains PTFE, and more preferably contains only PTFE. Polytetrafluoroethylene may include one in which a terminal or a part of a side chain is substituted (modified) with another substituent. In the case of a form in which a part of the terminal or side chain is substituted (modified) with another substituent, the proportion of the structural unit in which the terminal or side chain is substituted (modified) with another substituent is preferably 10 mol% or less, and more preferably 5 mol% or less, with respect to 100 mol% of all the structural units.

The first binder may contain another binder other than the above binder, but from the viewpoint of further improving the mechanical strength of the first solid electrolyte layer, the ratio of the other binder is preferably 10 mass% or less, more preferably 5 mass% or less, further preferably 3 mass% or less, particularly preferably 1 mass% or less, and most preferably 0 mass% (that is, the other binder is not contained) with respect to the total mass of the first binder.

When the first binder contains PTFE, the amount of PTFE in the first solid electrolyte layer is preferably 3 mass% or more and 50 mass% or less, more preferably 5 mass% or more and 30 mass% or less, and further preferably 10 mass% or more and 20 mass% or less with respect to the total solid content contained in the first solid electrolyte layer. When the ratio is 3 mass% or more, the tensile strength of the first solid electrolyte layer is improved, so that the first solid electrolyte layer excellent in handleability can be obtained. When the ratio is 50 mass% or less, the ion conductivity of the first solid electrolyte layer is improved, so that a laminate type secondary battery excellent in rate characteristics can be obtained.

### (Second binder)

The binder (second binder) contained in the second solid electrolyte layer contain at least one selected from the group consisting of styrene-butadiene rubber (SBR), polyvinylidene fluoride (PVdF), polybutylene terephthalate (PBT), polyethylene terephthalate (PET), carboxymethyl cellulose (CMC), polyethylene oxide (PEO), polyvinyl alcohol (PVA), polyethylene (PE), polypropylene (PP), polymethylpentene (PMP), polybutene (PB), polyether nitrile (PEN), polyacrylonitrile (PAN), polyimide (PI), polyamide (PA), polyamide imide (PAI), an ethylene-vinyl acetate copolymer (EVA), polyvinyl chloride (PVC), an ethylene-propylene-diene copolymer, a styrene-butadiene-styrene block copolymer, and a styrene-isoprene-styrene block copolymer. Since these binders are less likely to be reductively decomposed due to the negative electrode potential, deterioration of the second solid electrolyte layer due to repeated charging and discharging can be suppressed. From the viewpoint of further suppressing the deterioration of the second solid electrolyte layer, the second binder preferably contains SBR or PVdF, more preferably contains only at least one of SBR and PVdF, and further preferably contains only SBR.

The second binder may contain another binder other than the above binder, but from the viewpoint of further suppressing reductive decomposition of the second solid electrolyte layer due to the negative electrode potential, the ratio of the other binder is preferably 10 mass% or less, more preferably 5 mass% or less, further preferably 3 mass% or less, particularly preferably 1 mass% or less, and most preferably 0 mass% (that is, the other binder is not contained) with respect to the total mass of the second binder.

The amount of the second binder in the second solid electrolyte layer is preferably 1 mass% or more and 30 mass% or less, more preferably 3 mass% or more and 20 mass% or less, and further preferably 5 mass% or more and 10 mass% or less with respect to the total solid content contained in the second solid electrolyte layer. When the ratio is 1 mass% or more, the mechanical strength of the second solid electrolyte layer is further improved, so that a short circuit can be more effectively suppressed. When the ratio is 30 mass% or less, the ion conductivity of the second solid electrolyte layer is improved, so that a laminate type secondary battery excellent in rate characteristics can be obtained.

In the laminate type secondary battery according to the present embodiment, it is essential that when the power generating element is viewed in plan view, at least a part of the outer peripheral end (preferably the entire circumference) of the positive electrode active material layer is located inside the outer peripheral end of the first solid electrolyte layer or the outer peripheral end of the second solid electrolyte layer (in other words, at least one of the first solid electrolyte layer and the second solid electrolyte layer has a size slightly larger than that of the positive electrode active material layer). With such a configuration, it is possible to prevent growth of dendrite from the outer peripheral end of the negative electrode active material layer and a short circuit due to contact between the dendrite and the positive electrode active material layer caused by the growth.

From the viewpoint of further preventing the short circuit as described above, when the power generating element is viewed in plan view, at least a part of the outer peripheral end (preferably the entire circumference) of the second solid electrolyte layer is located inside the outer peripheral end of the first solid electrolyte layer (in other words, the first solid electrolyte layer has a size slightly larger than that of the second solid electrolyte layer).

The thickness of the first solid electrolyte layer is not particularly limited, but is, for example, preferably in a range of 1 to 100 µm and more preferably 10 to 50 µm. When the thickness is 1 µm or more, the mechanical strength of the first solid electrolyte layer can be further improved. When the thickness is 100 µm or less, the energy density of the battery can be further improved.

The thickness of the second solid electrolyte layer is not particularly limited, but is, for example, preferably in a range of 0.1 to 100 µm, more preferably 0.5 to 50 µm, and further more preferably 1 to 10 µm. When the thickness is 0.1 µm or more, the contact of the first solid electrolyte layer with the negative electrode active material layer is further suppressed, so that deterioration of the first solid electrolyte layer can be more effectively suppressed. When the thickness is 100 µm or less, the energy density of the battery can be further improved.

From the viewpoint of further improving the ion conductivity of the second solid electrolyte layer, the thickness of the second solid electrolyte layer is preferably equal to or more than the maximum particle size of the second solid electrolyte. In the present specification, the maximum particle size of the second solid electrolyte is measured by the following method. First, the second solid electrolyte to be measured is placed in a glass bottle, and diluted with 1,3,5-trimethylbenzene (mesitylene) so that the concentration of the second solid electrolyte is 0.5 mass%. One drop of the obtained diluted solution is added dropwise to the center of the slide glass. A cover glass is put on the dropped diluted solution, and the cover glass is pressed with a finger from above to wipe off the protruding diluted solution. A manicure is applied to four sides of the cover glass with a brush to seal the cover glass, thereby preparing a specimen (preparation). The specimen is charged into a particle image analyzer (Morphologi 4, manufactured by Malvern Panalytical Ltd.), and the maximum particle size of the second solid electrolyte is measured.

### [Positive electrode active material layer]

The positive electrode active material layer 15 essentially contains a positive electrode active material, and may contain a solid electrolyte, a binder, and a conductive aid as necessary.

The type of the positive electrode active material contained in the positive electrode active material layer is not particularly limited, and examples thereof include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Examples of the oxide active material other than those described above include Li₄Ti₅O₁₂. Among them, Li(Ni-Mn-Co)O₂ and a material obtained by substituting a part of these transition metals with another element (hereinafter, also referred to as "NMC composite oxide") are preferably used as the positive electrode active material.

It is also one of preferred embodiments that a sulfur-based positive electrode active material is used. Examples of the sulfur-based positive electrode active material include particles or a thin film of an organic sulfur compound or an inorganic sulfur compound, and any material may be used as long as the material can release lithium ions during charging and occlude lithium ions during discharging by utilizing an oxidation-reduction reaction of sulfur.

The content of the positive electrode active material in the positive electrode active material layer is preferably 50 to 100 mass%, more preferably 55 to 95 mass%, and further preferably 60 to 90 mass%.

The thickness of the positive electrode active material layer varies depending on the configuration of the intended all-solid-state battery, but is usually 0.1 to 1000 µm and preferably 10 to 100 µm.

Although one embodiment of the secondary battery of the present invention has been described above, the present invention is not limited to only the configurations described in the above-described embodiment, and can be appropriately changed based on the description of the claims. The following embodiments are also included in the scope of the present invention: the all-solid-state battery according to claim 1 having the feature of claim 2; the all-solid-state battery according to claim 1 or 2 having the feature of claim 3; the all-solid-state battery according to claim 3 having the feature of claim 4; and the all-solid-state battery according to any one of claims 1 to 4 having the feature of claim 5.

### Examples

Hereinafter, the present invention will be described in more detail with reference to Examples. However, the technical scope of the present invention is not limited only to the following Examples. In the following description, the instruments, devices, and the like used in the glove box were sufficiently dried in advance.

### <Preparation example of evaluation cell>

### [Example 1]

### (Preparation of tabbed positive electrode)

In a glove box in an argon atmosphere with a dew point of -68°C or lower, 70 parts by mass of an NMC composite oxide (LiNi_{0.8}Mn_{0.1}Co_{0.1}O₂) as a positive electrode active material, 10 parts by mass of acetylene black as a conductive aid, and 20 parts by mass of an argyrodite type sulfide solid electrolyte (Li₆PS₅Cl, average particle size (D50): 1µm) as a solid electrolyte were mixed using an agate mortar. To 100 parts by mass of the obtained mixed powder, 2 parts by mass of polytetrafluoroethylene (PTFE) as a binder was added, and the resulting mixture was lightly kneaded, and then kneaded in a mortar for 2 minutes while a shear force was applied. It was confirmed that the binder was fibrillated, and then the kneaded product was molded into a sheet shape having a thickness of 200 µm using a hand roller. The obtained sheet-shaped molded body was passed through a tabletop roll press machine to obtain a sheet-shaped positive electrode active material layer having a thickness of 100 µm. A sheet-shaped positive electrode active material layer was disposed on an etched aluminum foil as a positive electrode current collector, and bonded using a tabletop roll press machine. The obtained laminate was cut so that the positive electrode active material layer was formed into a square having a size of 2.0 cm × 2.0 cm and the positive electrode current collector was formed into a rectangle having a size of 2.0 cm × 3.0 cm (at this time, an uncoated portion of the positive electrode active material layer was formed into a rectangle having a size of 2.0 cm × 1.0 cm). Then, a tab lead (made of aluminum) was welded to the uncoated portion of the positive electrode active material layer of the positive electrode current collector to obtain a tabbed positive electrode.

### (Preparation of first solid electrolyte layer)

In a glove box in an argon atmosphere with a dew point of -68°C or lower, 80 parts by mass of an argyrodite type sulfide solid electrolyte (Li₆PS₅Cl, average particle size (D50): 3 µm) as a solid electrolyte and 20 parts by mass of polytetrafluoroethylene (PTFE) as a binder were mixed using an agate mortar, and then kneaded in a mortar for 2 minutes while a shear force was applied. It was confirmed that the binder was fibrillated, and then the obtained kneaded product was sandwiched between two SUS304 foils (thickness: 50 µm) and molded into a sheet shape having a thickness of 200 µm using a hand roller while being heated by a hot plate set at 80°C. The molded body was spread and stretched into a sheet shape sandwiched between the SUS foils to a thickness of 50 µm while reducing the gap by 20 µm in a state where the roll surface temperature was 80°C with a tabletop roll press machine equipped with a heating mechanism, and then cut into a square having a size of 2.5 cm × 2.5 cm to obtain a first solid electrolyte layer.

### (Preparation of laminate of second solid electrolyte layer and tabbed negative electrode current collector)

In a glove box in an argon atmosphere with a dew point of -68°C or lower, 95 parts by mass of an argyrodite type sulfide solid electrolyte (Li₆PS₅Cl, average particle size: 1 µm) as a solid electrolyte and 5 parts by mass of styrene-butadiene rubber (SBR) as a binder were dispersed using 1,3,5-trimethylbenzene as a solvent so that the solid content was 47 mass%. The above binder was adjusted to a concentration of 6 mass% using 1,3,5-trimethylbenzene in advance. The obtained dispersion was stirred at 1000 rpm for 3 minutes using a planetary centrifugal mixer to prepare a slurry. The obtained slurry was applied onto a negative electrode current collector (made of SUS430, thickness: 10 µm) so that the film thickness after drying was 10 µm, and the solvent was dried on a hot plate set at 80°C for 30 minutes. The obtained laminate was cut so that the second solid electrolyte layer was formed into a square having a size of 2.2 cm × 2.2 cm and the negative electrode current collector was formed into a rectangle having a size of 2.2 cm × 3.2 cm (at this time, an uncoated portion of the second solid electrolyte layer was formed into a rectangle having a size of 2.2 cm × 1.0 cm). Then, a tab lead (one obtained by plating copper with nickel) was welded to the uncoated portion of the second solid electrolyte layer of the negative electrode current collector to obtain a laminate of the second solid electrolyte layer and the tabbed negative electrode current collector.

### (Evaluation cell)

The "tabbed positive electrode", the "first solid electrolyte layer", and the "laminate of the second solid electrolyte layer and the tabbed negative electrode current collector" prepared above were laminated such that the positive electrode active material layer and one surface of the first solid electrolyte layer were adjacent to each other and the other surface of the first solid electrolyte layer and the second solid electrolyte layer were adjacent to each other to obtain a power generating element. The power generating element was covered with a laminate film, and the tab portion was welded by a sealer. One side of the laminate film was left and the other sides thereof were sealed using a vacuum sealer. The obtained cell was covered with the laminate film, sandwiched between two aluminum plates (thickness: 5 mm), and subjected to isostatic pressing (CIP) for 1 minute under the conditions of 80°C and 500 MPa. Thereby, interfaces of the positive electrode current collector, the positive electrode active material layer, the first solid electrolyte layer (thickness after CIP: 35 µm), the second solid electrolyte layer (thickness after CIP: 5 µm), and the negative electrode current collector were joined to obtain an evaluation cell of this example.

### [Example 2]

Cutting in the above (Preparation of tabbed positive electrode) was performed so that the positive electrode active material layer was formed into a square having a size of 2.2 cm × 2.2 cm and the positive electrode current collector was formed into a rectangle having a size of 2.2 cm × 3.2 cm (at this time, an uncoated portion of the positive electrode active material layer was formed into a rectangle having a size of 2.2 cm × 1.0 cm). Cutting in the above (Preparation of first solid electrolyte layer) was performed so that the first solid electrolyte layer was formed into a square having a size of 2.2 cm × 2.2 cm. Cutting in the above (Preparation of laminate of second solid electrolyte layer and tabbed negative electrode current collector) was performed so that the second solid electrolyte layer was formed into a square having a size of 2.4 cm × 2.4 cm and the negative electrode current collector was formed into a rectangle having a size of 2.4 cm × 3.4 cm (at this time, an uncoated portion of the second solid electrolyte layer was formed into a rectangle having a size of 2.4 cm × 1.0 cm). An evaluation cell of this example was obtained in the same manner as in Example 1 except for these.

### [Example 3]

An evaluation cell of this example was obtained in the same manner as in Example 1, except that in the above (Preparation of laminate of second solid electrolyte layer and tabbed negative electrode current collector), polyvinylidene fluoride (PVdF) was used as the binder and butyl acetate was used as the solvent.

### [Comparative Example 1]

Cutting in the above (Preparation of tabbed positive electrode) was performed so that the positive electrode active material layer was formed into a square having a size of 2.0 cm × 2.0 cm and the positive electrode current collector was formed into a rectangle having a size of 2.0 cm × 3.0 cm (at this time, an uncoated portion of the positive electrode active material layer was formed into a rectangle having a size of 2.0 cm × 1.0 cm). Cutting in the above (Preparation of first solid electrolyte layer) was performed so that the first solid electrolyte layer was formed into a square having a size of 2.0 cm × 2.0 cm. Cutting in the above (Preparation of laminate of second solid electrolyte layer and tabbed negative electrode current collector) was performed so that the second solid electrolyte layer was formed into a square having a size of 2.0 cm × 2.0 cm and the negative electrode current collector was formed into a rectangle having a size of 2.0 cm × 3.0 cm (at this time, an uncoated portion of the second solid electrolyte layer was formed into a rectangle having a size of 2.0 cm × 1.0 cm). An evaluation cell of this comparative example was obtained in the same manner as in Example 1 except for these.

### [Comparative Example 2]

An evaluation cell of this comparative example was obtained in the same manner as in Example 1, except that in the above (Preparation of first solid electrolyte layer), the thickness of the first solid electrolyte layer was set to 60 µm, and in the above (Preparation of laminate of second solid electrolyte layer and tabbed negative electrode current collector), the second solid electrolyte layer was not formed on the negative electrode current collector. The thickness of the first solid electrolyte layer after CIP was 40 µm.

### [Comparative Example 3]

The above (Preparation of first solid electrolyte layer) was performed by the following method. In a glove box in an argon atmosphere with a dew point of -68°C or lower, 80 parts by mass of an argyrodite type sulfide solid electrolyte (Li₆PS₅Cl, average particle size (D50): 1 µm) as a solid electrolyte and 20 parts by mass of polyvinylidene fluoride (PVdF) as a binder were dispersed using butyl acetate as a solvent so that the solid content was 47 mass%. As the binder, butyl acetate was used to adjust the concentration to 6 mass% in advance. The obtained dispersion was stirred at 1000 rpm for 3 minutes using a planetary centrifugal mixer to prepare a slurry. The obtained slurry was applied onto a SUS430 foil (thickness: 10 µm) so that the film thickness after drying was 50 µm, and the solvent was dried on a hot plate set at 80°C for 30 minutes. The SUS430 foil was peeled off from the obtained laminate, and then the laminate was cut into a square having a size of 2.5 cm × 2.5 cm to obtain a first solid electrolyte layer. An evaluation cell of this comparative example was obtained in the same manner as in Example 1 except for these.

### [Comparative Example 4]

The above (Preparation of laminate of second solid electrolyte layer and tabbed negative electrode current collector) was performed by the following method. In a glove box in an argon atmosphere with a dew point of -68°C or lower, 95 parts by mass of an argyrodite type sulfide solid electrolyte (Li₆PS₅Cl, average particle size: 1 µm) as a solid electrolyte and 5 parts by mass of polytetrafluoroethylene (PTFE) as a binder were mixed using an agate mortar, and then kneaded in a mortar for 2 minutes while a shear force was applied. It was confirmed that the binder was fibrillated, and then the obtained kneaded product was sandwiched between two SUS430 foils (thickness: 50 µm) and molded into a sheet shape having a thickness of 200 µm using a hand roller while being heated by a hot plate set at 80°C. The molded body was spread and stretched into a sheet shape sandwiched between the SUS foils to a thickness of 50 µm while reducing the gap by 20 µm in a state where the roll surface temperature was 80°C with a tabletop roll press machine equipped with a heating mechanism. The obtained laminate was cut so that the second solid electrolyte layer was formed into a square having a size of 2.2 cm × 2.2 cm and the negative electrode current collector was formed into a rectangle having a size of 2.2 cm × 3.2 cm (at this time, an uncoated portion of the second solid electrolyte layer was formed into a rectangle having a size of 2.2 cm × 1.0 cm). Then, a tab lead (one obtained by plating copper with nickel) was welded to the uncoated portion of the second solid electrolyte layer of the negative electrode current collector to obtain a laminate of the second solid electrolyte layer and the tabbed negative electrode current collector. An evaluation cell of this comparative example was obtained in the same manner as in Example 1 except for these.

### [Comparative Example 5]

The above (Preparation of first solid electrolyte layer) was performed by the following method. In a glove box in an argon atmosphere with a dew point of -68°C or lower, 80 parts by mass of an argyrodite type sulfide solid electrolyte (Li₆PS₅Cl, average particle size (D50): 1 µm) as a solid electrolyte and 20 parts by mass of styrene-butadiene rubber (SBR) as a binder were dispersed using 1,3,5-trimethylbenzene as a solvent so that the solid content was 47 mass%. As the binder, 1,3,5-trimethylbenzene was used to adjust the concentration to 6 mass% in advance. The obtained dispersion was stirred at 1000 rpm for 3 minutes using a planetary centrifugal mixer to prepare a slurry. The obtained slurry was applied onto a SUS430 foil (thickness: 10 µm) so that the film thickness after drying was 50 µm, and the solvent was dried on a hot plate set at 80°C for 30 minutes. The SUS430 foil was peeled off from the obtained laminate, and then the laminate was cut into a square having a size of 2.5 cm × 2.5 cm to obtain a first solid electrolyte layer. An evaluation cell of this comparative example was obtained in the same manner as in Example 1 except for these.

### <Preparation example of first solid electrolyte layer for evaluation>

### [Comparative Reference Example 1-1]

In a glove box in an argon atmosphere with a dew point of -70°C or lower, an argyrodite type sulfide solid electrolyte (Li₆PS₅Cl, average particle size (D50): 3 µm) as a solid electrolyte was placed in a cylindrical tube jig (φ10.2 mm) made of ceramics, and uniaxially press-molded at 25°C and 100 MPa to prepare a first solid electrolyte layer for evaluation having a thickness of 50 µm.

### [Comparative Reference Example 1-2]

In a glove box in an argon atmosphere with a dew point of -68°C or lower, 99 parts by mass of an argyrodite type sulfide solid electrolyte (Li₆PS₅Cl, average particle size (D50): 3 µm) as a solid electrolyte and 1 part by mass of polytetrafluoroethylene (PTFE) as a binder (the ratio of the binder amount with respect to the solid content of the first solid electrolyte layer was 1 mass%) were mixed using an agate mortar, and then kneaded in a mortar for 2 minutes while a shear force was applied. The obtained kneaded product was sandwiched between two SUS304 foils (thickness: 50 µm) and molded into a sheet shape having a thickness of 200 µm using a hand roller while being heated by a hot plate set at 80°C. The molded body was spread and stretched into a sheet shape sandwiched between the SUS foils to a thickness of 50 µm while reducing the gap by 20 µm in a state where the roll surface temperature was 80°C with a tabletop roll press machine equipped with a heating mechanism, thereby obtaining a first solid electrolyte layer for evaluation of this comparative example.

### [Reference Examples 1-1 to 1-6 and Comparative Reference Example 1-3]

A first solid electrolyte layer for evaluation of each example was obtained in the same manner as in Comparative Reference Example 1-2, except that the ratio of the binder amount with respect to the solid content of the first solid electrolyte layer was changed as shown in Table 3 below.

### <Charge-discharge test>

The evaluation cell prepared above was subjected to the following charge-discharge test. The charge-discharge test was performed while applying a confining pressure of 3 MPa in the lamination direction of the evaluation cell using the pressurizing member. First, the evaluation cell was charged at 0.01 C for 5 seconds, and then left to stand still in a thermostatic chamber set at 60°C for 5 hours to set the temperature of the cell to 60°C. The cell was charged with a constant current corresponding to 0.05 C, and when the cell voltage reached 4.2 V, the charging was switched to a constant voltage mode, the current value reached 0.01 C, and then pausing was performed for 0.5 hours. Thereafter, the cell was discharged at a constant current corresponding to 0.05 C, discharging was performed until the cell voltage reached 2.5 V, and then pausing was performed for 0.5 hours. This cycle was taken as one cycle, and 10 cycles of charge and discharge were performed. The charge capacity and the discharge capacity at the first cycle were measured, the percentage (%) of the discharge capacity with respect to the charge capacity was calculated, and the obtained value was taken as the charge-discharge efficiency. The discharge capacity at the 10th cycle was measured, the percentage (%) of the discharge capacity at the 10th cycle to the discharge capacity at the first cycle was calculated, and the obtained value was taken as the capacity retention rate. The results are shown in Tables 1 and 2 below.

### <Short circuit evaluation>

The charge-discharge test was performed at n = 5, and the obtained arithmetic average value of the charge-discharge efficiency was taken as the average charge-discharge efficiency. Then, the short circuit was evaluated based on the following criteria. The results are shown in Tables 1 and 2 below.
O (Without short circuit): The average charge-discharge efficiency is 90% or more.
△ (Micro-short circuit): The average charge-discharge efficiency is 80% or more and less than 90%.
× (With short circuit): The average charge-discharge efficiency is less than 80%.

### <Handleability evaluation>

For the first solid electrolyte layer for evaluation prepared above and the first solid electrolyte layer prepared by the method described in (Preparation of first solid electrolyte layer) in Examples and Comparative Examples described above, a tensile test was performed in accordance with JIS K 6251:2017 "Rubber, vulcanized or thermoplastic-Determination of tensile stress-strain properties" to measure the breaking strength. A test piece was a dumbbell-shaped No. 6, the tensile speed was 10 mm/min, and the temperature was room temperature (25 degrees). Then, the handleability was evaluated based on the following criteria. The first solid electrolyte layer for evaluation of Comparative Reference Example 1-1 did not have a strength as a free-standing film, and thus was evaluated as "× (poor)". The results are shown in Tables 2 and 3 below.
O (good): The breaking strength was 0.2 N/mm² or more.
△ (insufficient): The breaking strength was 0.1 N/mm² or more and less than 0.2 N/mm².
× (poor): The breaking strength was less than 0.1 N/mm² or free-standing film formation was not possible.

### <Ion conductivity evaluation>

The ion conductivity of the first solid electrolyte layer for evaluation prepared above was measured by the following method. In a glove box in an argon atmosphere with a dew point of -70°C or lower, the first solid electrolyte layer for evaluation was punched into φ10 mm. The first solid electrolyte layer for evaluation punched out in a cylindrical tube jig (φ10.2 mm) made of ceramics was inserted and uniaxially press-molded at 25°C and 100 MPa to prepare an Al/first solid electrolyte layer for evaluation/Al blocking cell. For the first solid electrolyte layer for evaluation of Comparative Reference Example 1-1, since a free-standing film could not be formed, an argyrodite type sulfide solid electrolyte (Li₆PS₅Cl, average particle size (D50): 3 µm) as a solid electrolyte layer was placed in the cylindrical tube jig in a powder state instead of the first solid electrolyte layer for evaluation, and uniaxially press-molded at 25°C and 100 MPa to prepare an Al/first solid electrolyte layer for evaluation/Al blocking cell. The impedance of the blocking cell was measured by electrochemical impedance spectroscopy (EIS) (measurement apparatus: manufactured by Solartron, 1260) at an amplitude of 10 mV and a frequency of 1 MHz to 0.1 Hz. The resistance was calculated from the intercept with the X axis in the Cole-Cole plot, normalized from the cross-sectional area and thickness of the sample, and the ion conductivity was determined. The relative values of the ion conductivities when the ion conductivity of Comparative Reference Example 1-1 (binder amount: 0 mass%) was 100 are shown in Table 3 below.

### [Table 1]

**Table 1**

| | Positive electrode active material layer | First solid electrolyte layer | | Second solid electrolyte layer | | (Negative electrode active material layer) | Short circuit | Charge-discharge efficiency (%) | Capacity retention rate (%) |
|---|---|---|---|---|---|---|---|---|---|
| | Size (cm) | Size (cm) | Binder | Size (cm) | Binder | Size (cm) | | | |
| Example 1 | 2.0 × 2.0 | 2.5 × 2.5 | PTFE | 2.2 × 2.2 | SBR | 2.2 × 2.2 | ○ | 100 | 99 |
| Example 2 | 2.2 × 2.2 | 2.2 × 2.2 | PTFE | 2.4 × 2.4 | SBR | 2.4 × 2.4 | ○ | 85 | 60 |
| Comparative Example 1 | 2.0 × 2.0 | 2.0 × 2.0 | PTFE | 2.0 × 2.0 | SBR | 2.0 × 2.0 | × | 70 | 35 |
| Comparative Example 2 | 2.0 × 2.0 | 2.5 × 2.5 | PTFE | None | None | 2.2 × 2.2 | × | 75 | 30 |

### [Table 2]

**Table 2**

| | Positive electrode active material layer | First solid electrolyte layer | | Second solid electrolyte layer | | (Negative electrode active material layer) | Handleability | Short circuit | Initial capacity (relative value) | Capacity retention rate (%) |
|---|---|---|---|---|---|---|---|---|---|---|
| | Size | Size | Binder | Size | Binder | Size | | | | |
| Example 1 | 2.0 × 2.0 | 2.5 × 2.5 | PTFE | 2.2 × 2.2 | SBR | 2.2 × 2.2 | ○ | ○ | 100 | 99 |
| Example 3 | 2.0 × 2.0 | 2.5 × 2.5 | PTFE | 2.2 × 2.2 | PVdF | 2.2 × 2.2 | Same as in Example 1 | ○ | 95 | 90 |
| Comparative Example 3 | 2.0 × 2.0 | 2.5 × 2.5 | PVdF | 2.2 × 2.2 | SBR | 2.2 × 2.2 | Δ | Δ | 85 | 60 |
| Comparative Example 4 | 2.0 × 2.0 | 2.5 × 2.5 | PTFE | 2.2 × 2.2 | PTFE | 2.2 × 2.2 | ○ | × | 70 | 35 |
| Comparative Example 5 | 2.0 × 2.0 | 2.5 × 2.5 | SBR | 2.2 × 2.2 | SBR | 2.2 × 2.2 | × | ○ | 95 | 64 |

### [Table 3]

**Table 3**

| | Binder amount (mass%) | Ion conductivity (relative value) | Handleability | Remark |
|---|---|---|---|---|
| Comparative Reference Example 1-1 | 0 | 100 | × | |
| Comparative Reference Example 1-2 | 1 | 99 | Δ | |
| Reference Example 1-1 | 3 | 98 | ○ | |
| Reference Example 1-2 | 5 | 97 | ○ | |
| Reference Example 1-3 | 10 | 96 | ○ | |
| Reference Example 1-4 | 20 | 90 | ○ | Same as in first solid electrolyte layer of Example 1 |
| Reference Example 1-5 | 30 | 85 | ○ | |
| Reference Example 1-6 | 50 | 75 | ○ | |
| Comparative Reference Example 1-3 | 55 | 50 | ○ | |

From the results shown in Tables 1 and 2, it is found that according to the present invention, a short circuit can be further suppressed in an all-solid-state battery including a solid electrolyte layer. In Comparative Examples 3 and 5, it was found that since the handleability (tensile strength) of the first solid electrolyte layer was insufficient, a protective member or the like for preventing cracking or chipping of the outer peripheral portion was required, and a short circuit could not be suppressed without lowering the energy density.

### Reference Signs List

- 10a: Laminate type secondary battery
- 11': Negative electrode current collector
- 11": Positive electrode current collector
- 13: Negative electrode active material layer
- 14: Positive electrode
- 15: Positive electrode active material layer
- 17: Solid electrolyte layer
- 17a: First solid electrolyte layer
- 17b: Second solid electrolyte layer
- 19: Single battery layer
- 21: Power generating element
- 25: Negative electrode current collecting plate
- 27: Positive electrode current collecting plate
- 29: Laminate film

## Claims

1. An all-solid-state battery, comprising a power generating element including:
a positive electrode including a positive electrode active material layer,
a negative electrode including a negative electrode active material layer, and
a solid electrolyte layer interposed between the positive electrode and the negative electrode and containing a solid electrolyte,
wherein the solid electrolyte layer includes a first solid electrolyte layer adjacent to the positive electrode active material layer and containing a first solid electrolyte and a first binder, and a second solid electrolyte layer adjacent to the negative electrode active material layer and containing a second solid electrolyte and a second binder,
the first binder contains at least one selected from the group consisting of polytetrafluoroethylene, carboxymethyl cellulose, polyethylene oxide, polyvinyl alcohol, and polyethylene,
the second binder contains at least one selected from the group consisting of styrene-butadiene rubber, polyvinylidene fluoride, polybutylene terephthalate, polyethylene terephthalate, carboxymethyl cellulose, polyethylene oxide, polyvinyl alcohol, polyethylene, polypropylene, polymethylpentene, polybutene, polyether nitrile, polyacrylonitrile, polyimide, polyamide, polyamideimide, an ethylene-vinyl acetate copolymer, polyvinyl chloride, an ethylene-propylene-diene copolymer, a styrene-butadiene-styrene block copolymer, and a styrene-isoprene-styrene block copolymer, and
when the power generating element is viewed in plan view, at least a part of an outer peripheral end of the positive electrode active material layer is located inside an outer peripheral end of the first solid electrolyte layer or an outer peripheral end of the second solid electrolyte layer.

2. The all-solid-state battery according to claim 1, wherein when the power generating element is viewed in plan view, at least a part of the outer peripheral end of the second solid electrolyte layer is located inside the outer peripheral end of the first solid electrolyte layer.

3. The all-solid-state battery according to claim 1, wherein the first binder contains polytetrafluoroethylene.

4. The all-solid-state battery according to claim 3, wherein an amount of the polytetrafluoroethylene in the first solid electrolyte layer is 3 mass% or more and 50 mass% or less with respect to a total solid content contained in the first solid electrolyte layer.

5. The all-solid-state battery according to claim 1, wherein the second binder contains styrene-butadiene rubber or polyvinylidene fluoride.
